# EUROPEAN PATENT APPLICATION

(11) **EP 2 637 386 A1**
(43) Date of publication of application: **11.09.2013**
(21) Application number: 12382084.7
(22) Date of filing: 05.03.2012
(51) Int. Cl.: H04L 29/12

(54) **Method and device for improving subscribers privacy in ip communications networks**

(71) Applicant: Alcatel Lucent, 75007 Paris (FR)
(72) Inventor: Sarsa Sarsa, Roberto, 28050 Madrid (ES)
(74) Representative: Carpintero Lopez, Francisco

(57) **Abstract**

A method for improving privacy of subscribers of a service provider IP network, where the service provider has a worldwide unique collection of global IP addresses to be used by their subscribers and where the region served by the service provider is divided in different zones, the service provider having for each zone a network node, called IP address assigner node, which assigns unique global IP addresses to the subscribers located in said zone. The method and devices proposed, increase the privacy disabling the non authorized IP geolocation by third parties without the need of additional computational efforts and strong investments in the network

## Description

### BACKGROUND OF THE INVENTION

### Technical field

The present invention relates to the improvement of privacy in communication networks and more particularly specifically to a method and device for improving privacy and security for subscribers of IP networks.

### Description of related art

As global computer networks, such as the internet, continue to grow globally at a rapid pace, an increasing number of people and businesses from around the world are accessing these networks for both business and personal activities. As a result, networks such as the Internet have become a virtual community where people communicate with each other by sending and receiving electronic, voice and image messages for both business and pleasure. These communications may include sharing ideas and information, sending personal and business messages back and forth, researching information, expressing opinions and ideas both personal and political, and conducting business negotiations and transactions (generally known as "electronic commerce" or "e-commerce"). In response to this new electronic activity, businesses and certain individuals attempt to identify and track individual Internet users for numerous purposes, including but not limited to, advertising, market research, customizing information for Internet sites (i.e., "websites"), snooping and eavesdropping on communications, as well as fraud and other malicious activities. In order to perform the attack Sniffers (software or hardware packet analyzers which can intercept and log traffic passing over a digital network) are usually used to capture the subscriber (user) flow based in the source global (public) IP address (that is, the IP address that the subscriber uses to access external networks and particularly the internet). These threats allow an outside user, be it a business or an individual entity, to perform such tasks as identifying the user, obtaining the user's personal information that is stored on his/her computer (including names, addresses, private financial files, and/or other confidential, private and/or sensitive information), as well as tracking the user's activities on the Internet, including recording every website visited or every e-mail sent or received by the user. For said reasons, end subscribers are increasingly concerned about the privacy of their personal information and communication in internet. As a consequence Network Service Providers (e.g. internet service providers) are continuosly implementing in their networks different mechanisms to protect the End Customers from those intrusions, like IPSec or channel encryption. On their side, the application providers increasingly use secure layer https to protect the information in the sesion layer. Those systems, although they require large investments, still provide vulnerabilities to attacks with mathematical approaches.

In IPv4 networks, another problem that the networks have to face is the exhaustion of IPv4 addresses to globally identify the entities in the IP communication networks. Different solutions have been used for several years to solve this exhaustion of IPv4 addresses:
The most successful solution of sharing globally unique IPv4 addresses is the venerable Network Address Translation (NAT). Network address translation (NAT) is a technique for translating one set of IP addresses known in one network to another set of IP addresses known in another. Typically, an organization maps its local inside addresses (also known as internal IP addresses or, in some scenarios, private IP addresses) to one or more globally unique IP addresses (also known as globally addresses and in some scenarios, public IP addresses).

There are pre-defined internal IP address spaces, e.g., 10.0.0.0 to 10.255.255.255 is one such range. These IP addresses do not have any global routing significance in the public internet. The source IP address in the outgoing IP packets from hosts with such an address needs to be translated from internal to global (i.e. from private addresses to global addresses), and the destination IP address in the incoming packets from global to internal. NAT conserves the global IP address space by providing independent islands of private IP address networks. Usually the mapping is established when a new session (e.g., a TCP connection) is established from a node in the private network to a node in the public network. The mapping exists as long as the session is active. The assumption here is that within a internal private network most IP devices only want to talk to other IP devices in the same network. So NAT is put (normally residing either in a router or a firewall) at the edge of the private network where it interfaces to the public Internet. The NAT has one or more globally unique IPv4 addresses and as a packet passes from its inside or private interface to its outside or global interface, NAT replaces the packet's internal (private) IPv4 address with one of its global IPv4 addresses. The NAT "remembers" which inside device the packet came from by mapping the inside address to the outside address.

But the pool of available addresses would not scale to the demands of modern networks of "always-on" devices. The assumption that most network-internal devices talk to other network-internal devices most of the time is no longer valid, as more and more data exchanges are across the public internet.

NAT overcomes this scaling problem by using not only its pool of global IPv4 addresses but also the port numbers available with each of the addresses. TCP and UDP headers support up to 65,536 port numbers, most of which are unused. So by mapping an internal [private address, port] tuple to an outside [global address, port] tuple, NAT is really mapping sessions rather than devices and can support a very large number of sessions with each public address. This approach has variously been called *Network Address and Port Translation* (NAPT).

Network address and port translation (NAPT) allows use of the same external public IP address for more than one internal private node by using TCP/user datagram protocol (TCP/UDP) port number for multiplexing multiple sessions. For example, when a host A, with private address 10,0.1.23, sends a TCP SYN connection establishment packet to an external node B with public address 128.89.16.149, the packet is intercepted by the NAT router (10.0.0.1). This NAT box (router) with external IP 135.180.132.24, creates a mapping from the private address 10.0.1.23 and port 1987 to its global IP address 135.180.132.24 and port 1734. The packet is forwarded to node B, as if it was originated from the NAT box, by changing the source IP and port to 135.180.132.24 and 1734 respectively. The NAT intercepts incoming packets having a destination address 135.180.132.24 and port 1734, and changes the destination to 10.0.1.23 and the port to 1987. Node A thinks that it is connected to node B's IP, whereas node B thinks that it is connected to NATs IP. It will be shown later, that even with this address translation, it is still possible to map private IP domains to specific global (public) IP domains. As an extension of this NAT technique, the Carrier Grade NAT nodes have appeared. The Carrier-Grade NAT nodes, also called Large Scale NAT, are NAT-based functional elements (i.e. it uses a NAT function) operated by an administrative entity (e.g., operator, service provider) to share the same address among several subscribers. CG-NAT nodes are managed by the administrative entity, not the subscribers. Traditional NAT appears at the edge of the customer network where it connects to a service provider, and translates between private IPv4 addresses within the customer network and one or a few global IP addresses assigned by the provider. They translate between internal and global IPv4 addresses; the internal or private side of the CG-NAT nodes faces the provider's customers (i.e. the subscribers). In other words, CG-NAT nodes enables service providers to assign private RFC 1918 IPv4 addresses to their customers rather than public, globally unique IPv4 addresses. Once again NAT comes to the rescue of a dwindling address supply. Said CG-NAT function is implemented in network nodes (e.g. routers) called CG-NAT nodes or boxes (or just CG-NATs).

Nowadays, a new IP version (protocol) IPv6, is being developed and used to deal with this long-anticipated IPv4 address exhaustion. IPv6 was developed by the Internet Engineering Task Force (IETF) and it is described in Internet Standard Document RI=C2460. Like IPv4, IPv6 is an internet-layer protocol for packet-switched internetworking and provides end-to-end datagram transmissions across multiple IP networks. While IPv4 allows 32 bits for an IP address and therefore has 2³² (4 294 967 296) possible addresses, IPv6 uses 128-bit addresses. Example of a IPv6 address, represented by colon-hexadecimal format:
2001 :0211 :0000:0000:ab01 :0000:0000:0011 (8 x 16 bit blocks)

So the address space is 2¹²⁸ (approximately 3.4×10³⁸) addresses (these globally unique IP addresses are called global IP addresses or in IPv6 they are also known as Global Unicast Addresses). This expansion allows for many more devices and subscribers on the internet as well as extra flexibility in allocating addresses and efficiency for routing traffic. IPv6 also solves some of the problems of IPv4. For example the header has been simplified, and routers do not have to compute complex checksums anymore on a hop-per-hop. The high number of global addresses available, also eliminates the primary need for network address translation (NAT). Subscribers will not need to share a global IP address (as in IPv4 scenarios) because as many global IP addresses as needed can be assigned to the subscriber as the number of addresses are almost unlimited. So NAT is not expected to be used in IPv6 and so CGNAT boxes should not be used.

As we will see later, in IPv6 networks and IPv4 network (even using CG-NAT), there is a fixed sub-collection of global IP address assigned to each zone served by the service provider. In these cases, even said sub-callectians of global IPs assigned to each area are not published by the service provider, the geolocation could be done. For example, performing the following steps:
1 - Whenever a subscriber makes a purchase in an online store, the store knows the IP being used and the postal address where the good has to be sent.
2 - Whenever a registered subscriber signs into an airline page, or loyalty program, they record their IP and they know your postal address

So with this information, a link can be done between the area (postal address) of users and the sub-pool of global IP addresses they were was using (obtaining therefore the sub-pool of global addresses assigned to the area where the subscriber is living).

These and other methods are used by some web applications to perform IP Geolocation (for each input IP address, said applications tells you the area where said IP was being used). Several companies like public Clouds, Online Gaming platforms, Content Delivery Networks, OTTs (over the top) companies (as Google, Yahoo...), Advertising companies... takes advantage of said IP Geolocation services and using said web applications, they can obtain said geolocation for every IP in the world without permission of the Service Provider of the subscriber.

Hence, even with the use of CGNATs or IPv6, the sniffing attacks and not-allowed geolocations are still possible and quite common. So it is still needed a solution which can increase the subscriber privacy.

The embodiments of the invention stated below will overcome at least some of these drawbacks.

### SUMMARY

The problems found in prior art techniques are generally solved or circumvented, and technical advantages are generally achieved, by the disclosed embodiments, which provide a method and devices for improved IPv4 and IPv6 networks.

According to a first aspect, a method is provided for improving privacy of subscribers of a service provider IP network, where the service provider has a worldwide unique collection of globa) IP addresses to be used by its subscribers and where the region served by the service provider is divided in different zones, the service provider having for each zone a network node (in other words, each zone has a network node associated), called IP address assigner node, which assigns unique global IP addresses to the subscribers located in said zone, the method comprising the following steps:
a) Every certain time period (periodically), every IP address assigner node applies a certain algorithm to select from the whole unique collection of global IP addresses of the service provider, a sub-collection of global IP addresses to use, said algorithm having at least one parameter, the value of which determines the result of the algorithm (that is, the sub-collection selected), the value of said at least one parameter being calculated every said time period by each IP address assigner node,
   where for the selection of the sub-collection, all the IP address assigner nodes use the same algorithm but with different value of the at least one parameter and where the result of the algorithm (the sub-collections selected) fulfill the following conditions: the sub-collections selected by an IP address assigner node changes every said certain time period and the sub-collections selected by different IP address assigner nodes are not overlapped, i.e. there is no global IP address in common between sub-collections selected by different IP address assigner nodes
b) each IP address assigner node assigns, to the subscribers located in their correspondent zones, global IP addresses from the sub-collection of global IP addresses selected in the previous step.

The algorithm may be a pseudorandom algorithm (in this case, the at least one parameter would be the seed of the pseudorandom algorithm) but any other types of algorithms can be used for the selection (with the condition that the selection fulfills the above requirements).

Said sub-collections may be formed by a single pool of consecutive global IP addresses or by several non-consecutive pools of consecutive global IP addresses. The service provider may be an internet service provider or any other type of network service provider and the global IP addresses may be used for communications of the subscribers with nodes of other networks.

The time period may be a day, a week, a month or any other time period.

In an embodiment, each IP address assigner node has an unique identification, ID, different from the identification of the rest of IP address assigner nodes and each IP address assigner node calculates the at least one parameter value as a function of said unique ID and the number of time periods elapsed from a certain defined time start.

In an embodiment, the global IP addresses are global IPv6 addresses and the IP assigner nodes are Broadband Remote Access Servers and in an alternative embodiment, the globally addresses are global IPv4 and the IP assigner nodes are Carrier Grade Network Address Translation Nodes (in this case, the zones will correspond to several area networks (MANs...), served by the same CG-NAT node). In an embodiment, there are a group of sub-collections of global IP addresses predefined in the service provider network and the step a) of applying a certain algorithm to select the sub-collection of global IP addresses to use during a certain time period comprises:
- every time period, each IP address assigner calculates the value of the at least one parameter as a function of an unique identification of the IP address assigner and the number of time periods elapsed from a certain defined time start.
- every time period, each IP address assigner applies the certain algorithm with the at least one parameter calculated to give as result (output) the number of sub-collection to use from the group of sub-collections.

Optionally, the sub-collection selected in a certain time period by an IP address assigner node of the service provider network would not be selected by any other of the IP address assigner nodes of the service provider network in the following time period, so the same sub-collection cannot be selected in two consecutive time periods.

Optionally, in each sub-collection, two groups of global IP addresses are defined and in each time period one of the group is used for assigning global IP addresses to the subscribers during said time period, called active group, and the other one is not used for assigning global IP addresses to the subscribers during said time period, called deprecated group and in the following time period (where said sub-collection will be selected by other IP address assigner node), the deprecated group becomes the active group, so said group is used for assigning global IP addresses to the subscribers and the previous active group becomes the deprecated group, so said group is not used for assigning global IP addresses to the subscribers.

According to a second aspect, a network node in a service provider IP network is provided for improving privacy of subscribers of the service provider IP network, where the service provider has a worldwide unique collection of global IP addresses to be used by its subscribers and where the region served by the service provider is divided in different zones and where said network node, called IP address assigner node, is associated to one of these zones and it assigns unique global IP addresses to the subscribers located in said zone, where said network nodes comprises:
- Means for, every certain time period, applying an algorithm to select from the whole unique collection of global IP addresses of the service provider, a sub-collection of global IP addresses to use, said algorithm having at least one parameter, the value of which determines the result of the algorithm (that is, the sub-collection selected), where for the selection of the sub-collection, all the IP address assigner nodes of the service provider networks use the same algorithm but with different value of the at least one parameter and where the algorithm fulfills the following conditions: the sub-collections selected by the IP address assigner node changes every said certain time period and the sub-collections selected by different IP address assigner nodes are not overlapped, i.e. there is no global IP address in common between sub-collections selected by different IP address assigner nodes
- Means for calculating the value of said at least one parameter every said time period by each IP address assigner node,
- Means for assigning to the subscribers located in its associated zone, global IP addresses from the sub-collection of global IP addresses previously selected.

In an embodiment, the global IP addresses are global IPv6 addresses and the network node is a Broadband Remote Access Server and in an alternative embodiment, the global IP addresses are global IPv4 and the network node is a Carrier Grade Network Address Translation Node,

In an embodiment, the network node has an unique identification, ID, different from the identification of the rest of IP address assigner nodes of the service provider network and where the network node calculates every period of time the at least one parameter value as a function of said unique ID and the number of time periods elapsed from a certain defined time start.

According to another aspect, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention, a method, a device and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method, system and device are now described, by way of example only, and with reference to the accompanying drawings, in which:

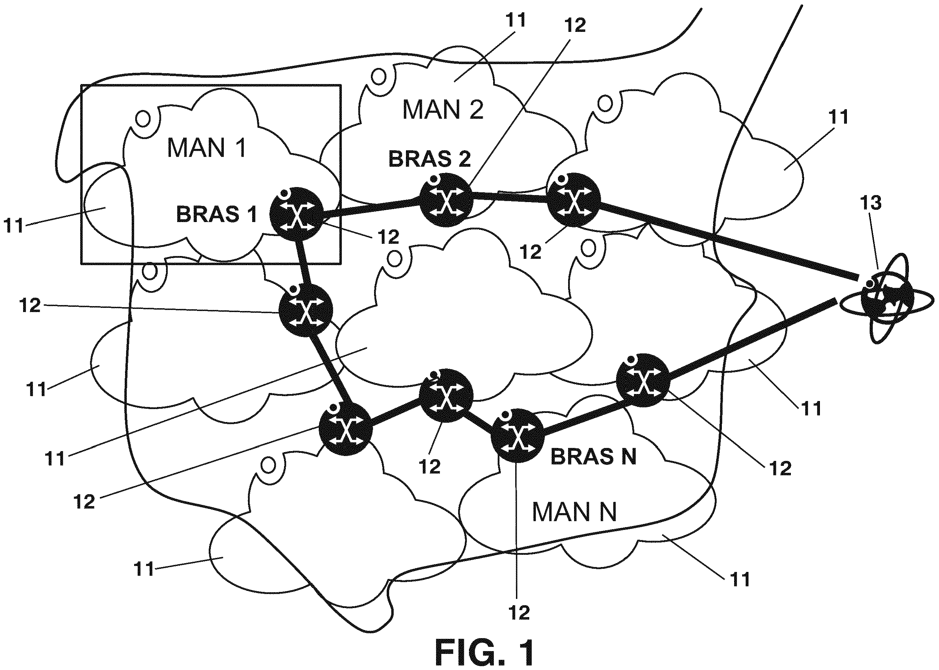

Figure 1 shows a schematic version of a network architecture without using CGNAT.

Throughout the figures like reference numerals refer to like elements.

### DESCRIPTION OF EMBODIMENTS

The present embodiments may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope. In the following embodiments, we are going to refer to IP networks, and IP addresses, but the embodiments are applicable as well to any other type of networks and addresses.

In the disclosed embodiments, it is proposed an improved method and devices which further increases the subscriber privacy (e.g. disabling IP geolocation by third parties) in the IPv6 and IPv4 networks but without the need of a strong investment in the network.

In figure 1, it is schematically shown the architecture of service provider networks not using CG-NAT (old IPv4 networks or IPv6 networks where, as stated above, CG-NATs are not necessary). The region served by the service provider (e.g. a whole country) is divided in different area networks 11 (each of these areas may be a Metropolitan area network, MAN or these areas can be defined by the subscriber's postal code or by any other way of identifying the subscriber's location). Said areas could be of different size (for one of the biggest Spanish service providers, each of said areas corresponds to one province but other divisions are possible). Each area network is served by a Broadband Remote Access Server, BRAS 12. A BRAS is a router which serves the subscribers in a area networks. The service provider assigns from its collection of global IP addresses, a sub-collection of global IP addresses to the BRAS which will assign them to their subscribers under requests, to communicate with other subscribers or which other external networks (13). So, in these networks, the nodes in charge of assigning global IP addresses to each subscriber will be the BRAS servers and each server will assign global IP addresses to the subscribers of a certain zone (the area network served by the BRAS).

In IPv4 networks using CG-NATs, the region served by the service provider (e.g. a whole country) is divided as well in different area networks (each of these areas may be a Metropolitan area network, MAN or these areas can be defined by the subscriber's postal code or by any other way of identifying the subscriber's lacatian.). Each area network is served for example by a Broadband Remote Access Server, BRAS. In the network, there will be one or more CG-NAT nodes, which will assign to each subscriber TCP/UDP session identified by an internal network address and port number, a global IP address and port number, creating a mapping from the internal (private) address and port to its external global IP address and port. Each CG-NAT node will cover several area networks (i.e. several BRAS). The CG-NAT nodes will intercept the outgoing packets from the area networks they are covering, to external networks and it will replace the source private IP address and source port of the packet by the assigned global IP address and second port. It will also intercept the incoming packets tent to the said area networks and and it replaces the destination public IP address and port by the internal (private) address and port combination. That is, for the communication inside the service provider network, internal private IP addresses are used but for the communication with other external networks (23), a global IP address assigned by the CG-NAT nodes 24 is used. So in these networks, the nodes in charge of assigning global IP addresses to each subscriber will be the CG-NAT nodes, and each node will assign global IP addresses to the subscribers of a certain zone (which corresponds to several area networks served by the CG-NAT).

Both in IPv4 and IPv6 networks, every network service provider will have a worldwide unique collection of global IP addresses (i.e. no other service provider will share the same global IP addresses) to use (or more specifically to be used by the network service provider subscribers). This collection of global IP addresses will be assigned by the correspondent national or international authority and it may be an unique pool of consecutive global IP addresses or it can be formed by several pools of consecutive IP addresses.

From said collection of public IP addresses, the Service Provider allocates an unique sub-collection of global IP addresses to each node in charge of assigning public IP addresses, i.e. in IPv6 networks the Service Provider will assign an unique sub-collection of global IPv6 addresses to each BRAS (covering a single area network) and in IPv4 networks using CG-NATs the Service Provider will assign an unique sub-collection of global (public) IPv4 addresses to each CG-NAT node (covering a group of area networks). Theses nodes would select the public IP address to be assigned to each subscriber session from their unique sub-collection of public IP addresses. Said sub-collection is fixedly allocated, that is, said sub-collection is usually assigned to the BRAS or CG-NAT node when it starts its activity in the service provider network (e.g when the node is registered in the network) and it is not changed in the whole working life of the node. In any case, in IPv4 networks, the sub-collection can be increased if the CG-NAT node needs more addresses but the original sub-collection of global IP addresses allocated to the node do not change.

As there are enough IPv6 addresses, usually, in IPv6 the sub-collection assigned to each BRAS are a consecutive pool of global IP addresses (because with a consecutive pool, the routing activities are easier). In IPv4 it is the opposite, there is not enough global IPv4 addresses. So every CG-NAT is allocated a small collection of global IP addresses, and when the CG-NAT needs more addresses (because the amount of subscribers has increases), it requests more IP addresses and the Service Provider assign a new pool of global IP addresses, so fragmentation is very high in IPv4 networks sub-collections.

Hence, in IPv6 networks, each area network (served by a BRAS) or in IPv4 networks, each group of area networks (served by a CG-NAT) will have a fixed sub-collection of global IP addresses assigned and these nodes node will assign a public IP address to the subscribers of the areas they are serving from the same sub-collection of IP addresses (the sub-collection assigned to the correspondent node). In other words, even if the IP address allocated to each subscriber was different each time (dynamic IP allocation), the IP address allocated always belong to the same sub-collection of global IPs, depending on the area where the subscriber is located. For said reason, as explained before, it is possible to obtain a link between the subscribers area and the sub-collection of global IP addresses being used and therefore, the area in which each subscriber was located can be obtain from the public IP address he was using (IP Geolocation) without participation and/or permission of the Service Provider. In other words, the subscriber location is easily traceable.

The embodiments stated below will overcome at least some of these drawbacks.

The proposed improvement is applied to the nodes in charge of assigning global IP addresses to the subscribers and it can be implemented in IPv6 networks and in IPv4 networks using CG-NATs; with the difference that in IPv6 networks the embodiments will affect the BRASs (as the nodes in charge of assigning global IPv6 addresses to the subscribers in this type of networks are the BRAS servers) and in IPv4 networks the embodiments will affect the CG-NAT nodes (as the nodes in charge of assigning global IPv4 addresses to the subscribers in this type of networks are the CG-NAT nodes). For said reason, to cover both types of implementations (i.e. both types of networks) in the description of the embodiments (without the necessity of repeating the same description for both types of networks), the general term "IP address assigner nodes" will be used, which will refer to the BRAS servers in the case of IPv6 networks and to the CG-NAT nodes in the case of IPv4 networks. For the same reason, in the description of the embodiments, the general term "global IP address" will be used, which will refer to the global IPv6 address in the case of IPv6 networks and to the global IPv4 address in the case of IPv4 networks

In the proposed embodiments, the global IP addresses sub-collection assigned to each node is blurred on a per period basis disabling the IP geolocation by third parties (i.e. without the service provider participation). In order to do that, in an exemplary embodiment, the Service Provider does not allocate a sub-collection of global IP addresses to each IP address assigner node as in the prior art techniques, but the whole collection of global IP addresses of the service provider will be available to each IP address assigner node of the service provider network . Then, from said collection, each IP address assigner node will select the sub-collection of global IP addresses to use every certain time period, applying a certain criteria or algorithm, said algorithm having one or several parameter (also called seeds) which univocally determine the result of the algorithm (that is, the sub-collection selected). In an embodiment, said criteria/algorithm is a pseudorandom algorithm. To do that, in an embodiment, each IP address assigner node of the service provider network will have an unique identification, ID, (not shared by other IP address assigner nodes of the service provider network) and each IP address assigner node will generate the sub-collection of global IP addresses they can use in a certain time period, applying the same algorithm with different seeds that will depend on said unique ID.
Said algorithm (and the parameters used) must be chosen so the sub-collections selected must fulfill the following requirements: the sub-collections selected by an IP address assigner node changes every said certain period of time and that the selected sub-collections must not be overlapped (i.e. there cannot be any global IP address in common between two sub-collections) to avoid any addressing conflict issue. So the seeds (parameters) used by each IP address assigner node should have a sort of orthogonality, or in other words, the seeds used by each IP address assigner node must make that the generated sub-collections are not overlapped

Said process of deciding which sub-collection of global IP address to use will be made every certain time period (e.g. a day, a week, a month) or even less if it is necessary to increase the security. In other words, every time period, the IP address assigner node applies the algorithm to generate a different sub-collection of global IP addresses to use; the value of the parameter which determines the result of the algorithm is changed every time period, so the sub-collection used by each IP address assigner node changes every time period. The time period between two consecutive sub-collection selections is called cycle or working cycle and it will have a duration of a time period.

The parameters (seeds) (and optionally even the algorithm) used should not be known by third parties, so it will be impossible for them to obtain the sub-collection used by each IP address assigner node (for third parties the distribution of the global IP addresses will look like random).

The service provider may have a database storing the sub-collection of global IP addresses assigned to each IP address assigner node.

Hence, with the proposed embodiments, there is not a fixed (invariable) allocation of a sub-collection of global IP addresses assigned to each assigned network node, but each IP address assigner node decides which sub-collection to use and this will change every certain period of time. In other words, the allocation is dynamically made and moreover, said allocation is randomly (or better said, pseudorandomly) decided. Hence, the IP geolocation by third parties (i.e. without the service provider participation) is almost impossible.

Usually, the IP address assigner node must advertise to other routing entities the sub-collection of global IP addresses being used (so that the routing entities know to which node they must route the different packets). In an embodiment, where the sub-collection of global IP addresses of each IP address assigner node are random (non consecutive at all), the messages to be sent to other routing entities (defining the sub-collection of global IP addresses used) may be very long and/or very complicated (or more than one message must be used) what could generate a scalability issue in the management plane, For said reasons, in an embodiment, the sub-collection of global IP addresses are composed by pools of consecutive global IP addresses, so its definition is easy and the messages to be sent to other routing entities are simple.

In an embodiment, the sub-collections of global IP addresses are pre-defined (let's call them sub-collection S₁.....S_{K} being K a design parameter. Usually, the sum of said sub-collections should be the whole collection assigned to the service provider. Each IP address assigner node knows the different possible sub-collections and every time period (cycle) each IP address assigner node decides which sub-collection to use following a common criteria or algorithm (e.g. a pseudorandom algorithm). Every participating IP address assigner node will be assigned a member ID, (e.g. from 1 to N, where N is the number of IP address assigner nodes of the service provider network). In an embodiment, a pseudorandom function f(x) gets as input the member ID, the common (shared) seed (if any) and the cycle number to give as output the number of sub-collection to be used by an IP address assigner node (different to the sub-collection to be used by other IP address assigner node). Every cycle (e.g. month, week or day), said calculation is repeated and the sub-collections assignations evolve to the next state (to the next cycle) according to the pseudorandom algorithm. The cycle number will be the number of cycles (time periods) elapsed from a certain moment considered as the start of the algorithm.

The numbers of sub-collections may be equal to the number of IP address assigner nodes (K=N), but usually, the numbers of pre-defiined sub-collections is higher than the number of IP address assigner nodes, to foresee the addition of a new IP address assigner node in the future (i.e. if a new IP address assigner node is added to the network in the feature, it is not needed to re-define the sub-collections in all the nodes). For example, if N=50, in an exemplary embodiment, the number of sub-collections predefined would be around 80.

In the most basic case, every node each cycle will move to the following sub-collection (that is, the group of subcollections are in a certain order and every time period, each IP address assigner selects the following sub-collection in the group as the sub-collection to use). In this case, the mathematic formula f(x) may be expressed, X= ID+number of cycle, being X the number of sub-collection assigned. That is, each change of cycle, each assigned network node pass from using sub-collection X to use sub-collection X+1. Immediately every IP address assigner node advertises through routing the new sub-collection and starts assigning global IP addresses to its subscribers with the new addressing. The number of cycle would be the number of time period elapsed from a certain time origin taken as reference. This is the simplest approach, but any other type of pseudorandom algorithm can be used by the IP address assigner nodes to decide which sub-collection to use, meeting the following requirement: In a certain cycle, the same sub-collection cannot be used by two different IP address assigner nodes.

The global IP addresses may be randomly distributed between the predefined not overlapping sub-collections, but they should be not "very random" so its definition is easy and the messages to be sent to other routing entities are simple. That's why, the sub-collections are usually composed by one or several pools of consecutive global IP addresses.

For a more clear explanation of said embodiment, a detailed example will be presented. Let's assume that in an IPv6 network there are 50 IP address assigner nodes, BRAS (for example, one for each province) and let's assume that the time period (cycle) is one day. Let's define every sub-collection as a pool of /30 IP addresses. The whole collection (all the sub-collections) are defined in every BRAS. Every day at a certain time (for example, 00:00) every BRAS will change the sub-collection used applying a pseudorandom function. In the simplest approach, for example, in the day 3 the BRAS with ID=4 will use the sub-collection X= ID + cycle number=4 +3=7 and the BRAS with ID=5 will use the sub-collection X= 5 + 3= 8. The following day, the BRAS with ID=4 will use the sub-collection 8 and the BRAS with ID=5 will use the sub-collection 9 so on. So the sub-collections will circulate between the different BRAS.

Usually, routing population takes some time to get populated all over the network and also the devices take some time to time out and renew the address. In other words, as the sub-collection of global IP addresses passes in a certain moment (change of cycle) from an IP address assigner node to another, at the beginning of the cycle, there may be some subscribers belonging to the old node which are still using IP addresses from the sub-collection that now is using the new IP address assigner node (with the consequent conflict of addresses is this new node starts assigning said globally addresses to its subscriber).

The safest approach to avoid this problem is to use some "guard pools" to ensure a sub-collection is completely deprecated by an IP address assigner node before the new owner IP address assigner node starts using it. These "guard pools" can be defined in several ways.

One simple and efficient way to define these "guard pools" is the following: The sub-collection used by any IP address assigner node in one cycle is not used by any of the IP address assigner nodes of the network in the following cycle. In other words, in each cycle (e.g. cycle C), each IP address node selects a sub-collection for assigning global IP addresses to the subscribers and in the following cycle (cycle C+1), said selected sub-collections will not be selected by any of the IP address assigner nodes (avoiding the problem of conflict of addresses explained above). In the next cycle (cycle C+2), said non-selectable (deprecated) sub-collections will be available again to be selected by any IP address assigner node to assign global IP addresses (and the sub-collections selected in cycle C+1 would not be selectable) and so on. From another point of view, we can say that every IP address assigner node has in each cycle an active sub-collection and a deprecated sub-collection (which will be its active sub-collection of the previous cycle) which cannot be used by any IP address assigner node.

This can be performed by choosing an appropriated algorithm (or appropriated seeds) to select the sub-collections, Said algorithm could, for example, define in a time period, only half of the sub-collections as selectable and in the following time period the other half of the sub-collections as selectable. In other words, the algorithm will select a sub-collection in a time period from only half of the whole group of sub-collections and in the following time period from the other half of the whole group of sub-collections.

In an example, let's assume that the time period is one day and that the IP address assigner node 34 has selected today the sub-collection 113. Tomorrow, the algorithm assigns to said node 34 the sub-collection 87 and the sub-collection 113 is now be deprecated (i.e. it cannot be used or selected by any other node). The following day, the sub-collection 113 can be again selected by any node and the sub-collection 87 will be now deprecated. Another way to define these "guard pools" is by distinguishing in each sub-collection two parts (usually each part with a half of the global IP addresses). In each cycle one of them is a deprecated part (not being used for assigning global IP addresses to the subscribers) and the other one an active part (being used for assigning global IP addresses to the subscribers). In the following cycle (where said sub-collection will be selected by other IP address assigner node), the deprecated part becomes the active part and the previous active part become deprecated part. With this approach we can assure that there is no conflict of addresses when a sub-collection pass from an IP address assigner node to another.

Of course, these cases of "guard pools", will make that half of the global IP addresses is not being used in each cycle.

In IPv6, this "waste" of addressing is not a cost or a drawback because the addressing space is almost infinite. In IPv4, this "waste" of addressing is neither serious, because with CG-NAT an IP is shared by typical 128 subscribers, so the addressing space is increased by 128. So in both networks, even in the worst case using double addressing than needed, it is worth given the new revenue stream achieved at no cost.

As explained before, in IPv6 networks, from said sub-collection of global IPv6 addresses to be used by each BRAS, each BRAS will assign global IP addresses to its subscribers. Said assignation of public IP addresses to subscribers should be as dynamic and sparse as possible as possible to make even more complicated the subscriber traceability. In IPu4 networks using CG-NAT nodes, from said sub-collection of global IPv4 addresses to be used by each CG-NAT node, every CG-NAT node will assign global IP addresses to its subscribers. Actually, as explained before, the CG-NAT node will assign a global IP address and port to each TCP/UDP session established by the subscriber. Even with the proposed embodiments the subscriber IP geolocation is much more difficult, said assignation of public IP addresses and port to subscriber sessions should be as dynamic and sparse as possible (e.g. pseudorandom) to make even more complicated the subscriber traceability. In a preferred embodiment, a pseudorandom global IP-port assignation as the one disclosed in Alcatel Patent "METHOD AND DEVICE FOR IMPROVING SECURITY IN IP COMMUNICATIONS NETWORKS" by Roberto Sarsa, may be employed to obtain maximum privacy/dispersion.

After deploying the mechanism disclosed in the proposed embodiments, IP geolocation by third parties is not possible any more (without the service provider participation) so OTT players like Google or Facebook will not be able to insert added value advertising and CDNs and alikes will not be able to select the best place to deliver their services paying more for bandwidth. Service Providers can provide the mapping of IP to geolocation under a subscription agreement to those OTT interested in this added value, or boost their own advertising broker, cloud, CDN and OpenAPI solutions.

Summarizing, the improvement proposed by the present embodiments, deliberately increases the privacy and disables the IP geolocation by third parties, by not having a fixed assignation of a sub-collection of global IP addresses for every IP address assigner node (BRAS or CG-NAT) but making a dynamic (e.g. pseudorandom) assignation of global IP addresses, changed every certain period of time making almost impossible to any third party to locate the user. The proposed mechanism will not need additional computational efforts and the subscriber privacy and protection is increased without the need of a strong investment in the network. IP geolocation may be still possible but it will require the Service Provider participation (with the correspondent profit for the service provider). As it has been shown the number of routing messages to be sent to the routing entities is not seriously increased.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for improving privacy of subscribers of a service provider IP network, where the service provider has a worldwide unique collection of global IP addresses to be used by its subscribers and where the region served by the service provider is divided in different zones, the service provider having for each zone a network node, called IP address assigner node, which assigns unique global IP addresses to the subscribers located in said zone, the method comprising the following steps:
a) Every certain time period, every IP address assigner node applies a certain algorithm to select from the whole unique collection of global IP addresses of the service provider, a sub-collection of global IP addresses to use, said algorithm having at least one parameter, the value of which determines the result of the algorithm, the value of said at least one parameter being calculated every said time period by each IP address assigner node,
where for the selection of the sub-collection, all the IP address assigner nodes use the same algorithm but with different value of the at least one parameter and where the selection fulfills the following conditions: the sub-collections selected by an IP address assigner node changes every said certain time period and the sub-collections selected by different IP address assigner nodes are not overlapped, i.e. there is no global IP address in common between sub-collections selected by different IP address assigner nodes
b) each IP address assigner node assigns, to the subscribers located in their correspondent zones, global IP addresses from the sub-collection of global IP addresses selected in the previous step.

2. A method according to claim 1, where said algorithm is a pseudo-random algorithm and the at least one parameter is the seed of the pseudo random algorithm.

3. A method according to any of the previous claims, where each IP address assigner node has an unique identification, ID, different from the identification of the rest of IP address assigner nodes and where each IP address assigner node calculates the at least one parameter value as a function of said unique ID and the number of time periods elapsed from a certain defined time start.

4. A method according to any of the previous claims, where the global IP addresses are global IPv6 addresses and the IP assigner nodes are Broadband Remote Access Servers.

5. A method according to claims 1-3, where the global IP addresses are global IPv4 and the IP assigner nodes are Carrier Grade Network Address Translation Nodes.

6. A method according to any of the previous claims, where there are a group of sub-collections of global IP addresses predefined and where the step a) of applying a certain algorithm to select the sub-collection of global IP addresses to use during a certain time period comprises:
- every time period, each IP address assigner calculates the value of the at least one parameter as a function of an unique identification of the IP address assigner and the number of time periods elapsed from a certain defined time start.
- every time period, each IP address assigner applies the certain algorithm with the at least one parameter calculated to give as result the number of sub-collection to use from the group of sub-collections.

7. A method according to claim 6, where the sub-collection selected in a certain time period by an IP address assigner node of the service provider network cannot be selected by any other of the IP address assigner nodes of the service provider network in the following time period, so the same sub-collection cannot be selected in two consecutive time periods.

8. A method according to any of the previous claims, where the sub-collections are formed by a single pool of consecutive global IP addresses or by several non-consecutive pools of consecutive global IP addresses.

9. A network node in a service provider network for improving privacy of subscribers of the service provider IP network, where the service provider has a worldwide unique collection of global IP addresses to be used by its subscribers and where the region served by the service provider is divided in different zones and where said network node, called IP address assigner node, is associated to one of these zones and it assigns unique global IP addresses to the subscribers located in said zone, where said network nodes comprises:
- Means for, every certain time period, applying an algorithm to select from the whole unique collection of global IP addresses of the service provider, a sub-collection of global IP addresses to use, said algorithm having at least one parameter, the value of which determines the result of the algorithm,
where for the selection of the sub-collection, all the IP address assigner nodes of the service provider networks use the same algorithm but with different value of the at least one parameter and where the algorithm fulfills the following conditions: the sub-collections selected by the IP address assigner node changes every said certain time period and the sub-collections selected by different IP address assigner nodes are not overlapped, i.e. there is no global IP address in common between sub-collections selected by different IP address assigner nodes
- Means for calculating the value of said at least one parameter every said time period by each IP address assigner node,
- Means for assigning to the subscribers located in its associated zone, global IP addresses from the sub-collection of globally addresses previously selected.

10. A network node according to claim 9, where the global IP addresses are global IPvC addresses and the network node is a Broadband Remote Access Server.

11. A network node according to claim 9, where the global IP addresses are global IPv4 addresses and the network node is a Carrier Grade Network Address Translation Node.

12. A network node according to claims 9-11, where the network node has an unique identification, ID, different from the identification of the rest of IP address assigner nodes and where the network node calculates every period of time the at least one parameter value as a function of said unique ID and the number of time periods elapsed from a certain defined time start.

13. A computer program product comprising computer-executable instructions for performing the method according to any of the claims 1-8, when the program is run on a computer.

14. A digital data storage medium encoding a machine-executable program of instructions to perform a method according to any of the claims 1-8.
